# EUROPÄISCHE PATENTANMELDUNG

(11) **EP 0 835 014 A2**
(43) Veröffentlichungstag der Anmeldung: **08.04.1998**
(21) Anmeldenummer: 97114283.1
(22) Anmeldetag: 19.08.1997
(51) Int. Cl.: H04M 3/30, H04M 3/00

(54) **Teilnehmeranschlussschaltung für den Anschluss einer analogen Teilnehmerleitung an eine digitale Zeitmultiplex-Fernsprechvermittlungsstelle**

(30) Priorität: 27.09.1996 DE 19639885
(71) Anmelder: SIEMENS AKTIENGESELLSCHAFT, 80333 München (DE)
(72) Erfinder: Krimmer, Roland, 82110 Germering (DE); Kunisch, Paul, 82178 Puchheim (DE)

(57) **Zusammenfassung**

Sie besteht unter anderem aus einer Schnittstellenschaltung (SLIC2) mit integrierten die Teilnehmerleitung (TL) betreffenden Prüffunktionen, einer im einfachsten Fall durch einen ohmschen Widerstand realisierten Testschaltung (TS) und einer zwei Umschaltekontakte (u1, u2) aufweisende Relaisschaltung (MR), durch die in der einen Schaltstellung die Adern (a, b) der Teilnehmerleitung mit der Schnittstellenschaltung verbunden werden und in der anderen Schaltstellung die Teilnehmerleitung abgetrennt und die Testschaltung an die Schnittstellenschaltung angeschaltet wird.

## Beschreibung

Die Erfindung betrifft eine Teilnehmeranschlußschaltung für den Anschluß einer analogen Teilnehmerleitung an eine digitale Zeitmultiplex-Fernsprechvermittlungsstelle.

Trotz des Trends bei Teilnehmeranschlußschaltungen moderner digitaler Zeitmultiplex-Fernsprechvermittlungsstellen zu möglichst vollständigen Halbleiterlösungen und zur Integration der Bauelemente verbleiben Funktionen, die bisher aus technologischen und aus Kostengründen nach wie vor unter Verwendung von Relais realisiert werden. Hierzu gehören Abschaltfunktionen, bei denen die Adern der Teilnehmerleitung von der Teilnehmeranschlußschaltung abgetrennt werden. Eine solche Abtrennung kommt beim Leistungsmerkmal 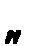 Precut over" in Frage, bei dem während der Installation eines neuen Amtes ganze Gruppen von Teilnehmeranschlußschaltungen vom Hauptverteiler abgetrennt werden müssen. Sie kommt ferner beim Leistungsmerkmal 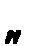 Power Cross" in Frage, bei dem wegen des Auftretens unzulässig hoher Fremdspannungen auf der Teilnehmerleitung diese von der Teilnehmeranschlußschaltung abgetrennt wird, um Auswirkungen der Überspannungen auf die Halbleiterelemente der Teilnehmeranschlußschaltung zu verhindern.

Ferner gehört zu den mittels Relais realisierten Funktionen der Testzugriff eines Prüfgeräts auf die Teilnehmeranschlußschaltung und auf die Adern der Teilnehmerleitung.

Bei bisherigen Lösungen werden für die erwähnten Relaisfunktionen drei gesonderte Relais eingesetzt, nämlich eines für die Realisierung der Abtrennung der Adern der Teilnehmerleitung bei den Funktionen Precut over und Power Cross und zwei Relais im Zusammenhang mit dem Testzugriff, von denen das eine der Anschaltung des Prüfgeräts an die Teilnehmeranschlußschaltung unter Abtrennung der Teilnehmerleitung von den Eingängen der Teilnehmeranschlußschaltung dient, so daß eine Überprüfung des Betriebs der Teilnehmeranschlußschaltung vorgenommen werden kann und das andere der Anschaltung des Prüfgeräts an die Teilnehmerleitung, ebenfalls unter Abtrennung der Teilnehmerleitung von der Teilnehmeranschlußschaltung dient, um eine Überprüfung der Teilnehmerleitung vornehmen zu können.

Die Aufgabe der Erfindung besteht darin, den Aufwand für die Realisierung der erwähnten Relaisfunktionen zu verringern.

Der Lösung dieser Aufgabe dient eine Teilnehmeranschlußschaltung mit den im Patentanspruch 1 angegebenen Merkmalen.

Bei der erfindungsgemäßen Teilnehmerschaltung wird für die genannte Relaisfunktion lediglich ein einziges Umschalterelais benötigt, das somit sozusagen ein multifunktionales Relais ist. Ermöglicht wird dies aufgrund des Umstandes, daß die Teilnehmerschaltung so ausgestaltet ist, daß sie selbst Prüffunktionen durchführen kann. Als Folge hiervon genügt als Testschaltung, die erfindungsgemäß im Zusammenhang mit der Durchführung von Prüfungen mittels des Relais an die Teilnehmeranschlußschaltung angeschaltet wird, im einfachsten Fall ein Widerstand.

Nachstehend wird die Erfindung anhand eines Ausführungsbeispiels unter Bezugnahme auf eine Figur näher erläutert.

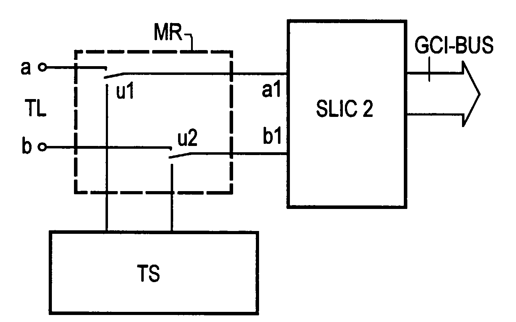

In der Figur sind von einer Teilnehmeranschlußschaltung mit den erfindungsgemäßen Merkmalen nur deren Schnittstellenteil SLIC2, die erfindungsgemäß vorgesehene multifunktionale Relaisschaltung MR sowie eine Testschaltung TS angedeutet. Der Schnittstellenteil SLIC2 ist in der Praxis in einen Hochvoltteil und in einen Niedervolt/Signalprozessorteil gegliedert. Im Hochvoltteil sind im wesentlichen die Funktionen der Speisung der Teilnehmerleitung mit programmierbarer Speisecharakteristik im Ruhe- und Gesprächszustand sowie die Detektierung des Stromes auf den Adern a und b der Teilnehmerleitung realisiert. Wesentliche Aufgaben des Niedervolt/Signalprozessorbausteins sind die programmierbare Festlegung relativer Sende- und Empfangs-Pegel, die Realisierung einer programmierbaren Eingangsimpedanz, die Durchführung der 2/4-Draht-Umsetzung mit programmierbarer Nachbildimpedanz sowie die Codierung/Decodierung der Sprachsignale.

Bei der erfindungsgemäßen Teilnehmeranschlußschaltung sind im Schnittstellenteil SLIC2 außer den genannten Funktionen auch Prüffunktionen realisiert, die neben einem Eigentest der Teilnehmeranschlußschaltung die Überprüfung der Teilnehmerleitung auf Leitungsunterbrechung oder Erdschlüsse der Leitungsadern sowie eine Überprüfung des an die Teilnehmerleitung angeschlossenen Teilnehmerendgerätes betreffen.

Das gemäß der Erfindung vorgesehene multifunktionale Relais MR weist zwei Umschaltekontakte u1 und u2 auf, mit deren Hilfe die a-Ader und die b-Ader der Teilnehmerleitung von den Eingängen a1 und b1 vom Schnittstellenteil SLIC2 der Teilnehmeranschlußschaltung abgetrennt und stattdessen diese Eingänge a1 und a2 mit einer Testschaltung TS verbunden werden können.

Im einfachsten Fall kann die Testschaltung TS aus einem einzigen Widerstand bestehen, durch den im Falle der Anschaltung die Eingänge a1 und b1 des Schnittstellenteils SLIC2 der Teilnehmerschaltung miteinander verbunden sind.

Die multifunktionale Relaisschaltung dient einerseits im Zusammenhang mit den Funktionen Precut over und Power Cross dazu, die Teilnehmeranschlußschaltung bzw. deren Teil SLIC2 von den Adern der Teilnehmerleitung abzutrennen. Der Umstand, daß in diesem Zusammenhang mit der Abtrennung die Testschaltung TS an die Eingänge a1 und b1 der Teilnehmeranschlußschaltung gelegt wird, ist dabei ohne Belang.

Im Zusammenhang mit der Durchführung von Prüfungen durch die im Schnittstellenteil SLIC2 der Teilnehmeranschlußschaltung integrierten Prüffunktionen werden zunächst zur Durchführung einer Eigenprüfung durch Betätigung des multifunktionalen Relais MR die Adern der Teilnehmerleitung von den Eingängen a1 und b1 abgetrennt und die Testschaltung an diese Eingänge angeschaltet, die im vorgenannten einfachsten Fall ihrer Ausführungsform lediglich eine Verbindung der Eingänge a1 und b1 über einen Widerstand bewirkt. Für die Durchführung komplexerer Eigenprüfungen kann die Testschaltung auch einen aufwendigeren Aufbau aufweisen, nämlich ein passives Netzwerk mit komplexem Widerstandsverhalten darstellen.

Zur Durchführung der eigentlichen die Teilnehmerleitung und das Teilnehmerendgerät betreffenden Prüfungen sind in der anderen Schaltstellung der multifunktionalen Relaisschaltung MR die Adern a und b der Teilnehmerleitung wieder an die Eingänge a1 und a2 angeschaltet, die Testschaltung TS hingegen ist in diesem Stadium der Prüfung abgetrennt und außer Betrieb.

Bei Ausführungen des Anschlußbereichs einer digitalen Fernsprechvermittlungsstelle, bei denen die Teilnehmeranschlußschaltungen gruppenweise zusammengefaßt sind, kann die Testschaltung statt leitungsindividuell nur gruppenindividuell vorhanden sein, in welchem Falle ein gruppeninterner Testbus vorhanden ist, an dem die gruppenindividuelle Testschaltung liegt und mit dem die leitungsindividuellen multifunktionalen Relaisschaltungen eine Verbindung herstellen.

## Patentansprüche

1. Teilnehmeranschlußschaltung für den Anschluß einer analogen Teilnehmerleitung (TL) an eine digitale Zeitmultiplex-Fernsprechvermittlungsstelle mit einer Schnittstellenschaltung (SLIC2), die zur Durchführung von Prüffunktionen ausgestattet ist, sowie mit einer multifunktionalen Relaisschaltung (MR), die zwei Umschaltekontakte (u1, u2) aufweist, mit deren Hilfe die Schnittstellenschaltung (SLIC2) von den Adern (a, b) der Teilnehmerleitung (TL) abtrennbar und stattdessen mit einer Testschaltung (TS) verbindbar ist, und die auch in anderen als die Durchführung einer Prüffunktion betreffenden Zusammenhängen zur Abtrennung der Teilnehmerleitung von der Schnittstellenschaltung (SLIC2) dient.

2. Teilnehmeranschlußschaltung nach Anspruch 1, **dadurch gekennzeichnet,** daß die Testschaltung (TS) aus einem passiven Netzwerk mit komplexen Widerstandsverhalten besteht, über das bei ihrer Anschaltung die von den Adern der Teilnehmerleitung abgetrennten Eingänge (a1, b1) der Schnittstellenschaltung (SLIC2) miteinander verbunden sind.
